# EUROPEAN PATENT SPECIFICATION

(11) **EP 2 258 199 B1**
(45) Date of publication and mention of the grant of the patent: **19.04.2017**
(21) Application number: 09726577.1
(22) Date of filing: 17.03.2009
(51) Int. Cl.: A21D 2/18

(54) **MIX FOR BAKERY FOOD**
MISCHUNG FÜR BACKWAREN
MÉLANGE POUR PRODUITS DE BOULANGERIE

(30) Priority: 02.04.2008 JP 2008096454
(43) Date of publication of application: 08.12.2010
(73) Proprietor: Nisshin Foods Inc., Tokyo 101-8441 (JP)
(72) Inventor: ETO, Keiko, Tokyo 103-8544 (JP); TAGAMI, Yuji, Tokyo 103-8544 (JP); ONOZAKI, Hiroshi, Tokyo 103-8544 (JP)
(74) Representative: Forstmeyer, Dietmar
(86) International application number: PCT/JP2009/055179
(87) International publication number: WO 2009/122900

(56) References cited:
- WO-A1-00/21375
- JP-A- 1 023 841
- JP-A- 6 038 666
- JP-A- 8 275 721
- JP-A- 10 056 949
- JP-A- 63 036 734
- JP-A- 2002 369 648
- JP-A- 2009 100 710
- US-A- 4 798 733
- KENNY S. ET AL.: 'Influence of Sodium Caseinate and Whey Protein on Baking Properties and Rheology of Frozen Dough.' CEREAL CHEM. vol. 78, no. 4, 2001, pages 458 - 463
- PARKINSON C J.: 'Uses for dairy ingredients in baked products.' J SOC DAIRY TECHNOL. vol. 37, no. 4, 1984, pages 125 - 127

## Description

### Technical Field

The present invention relates to a baked-snack premix that provides baked snacks having a crispy texture, and a baked snack made by using the premix. The baked-snack premix of the present invention is suitable as a premix particularly for Tai-yaki (Japanese-style muffins containing bean jam and shaped like fish etc.), pancakes, or waffles.

### Background Art

Baked snacks, such as Tai-yaki, Imagawa-yaki (Japanese-style round muffins containing bean jam) or Ohban-yaki (Japanese-style round muffins containing bean jam), Dora-yaki (Japanese-style round pancakes having bean jam sandwiched in between), and waffles, are food products in which a filling, such as bean jam or cream, is enclosed in a dough crust mainly consisting of wheat flour. Among these food products, it is preferable to provide Tai-yaki, Imagawa-yaki, and Ohban-yaki with crusts having a crispy texture and aromatic flavor. Conventional products have crusts that are relatively crispy and aromatic when fresh-baked, but their texture and aroma are not completely satisfactory. Further, their texture and flavor deteriorate with the passage of time.

As an example of a Tai-yaki-like food product whose crust surface provides a crispy texture just as if it were fresh-baked even after preserving the food product by freezing or chilling and then reheating and warming it in a microwave oven, Patent Document 1 proposes a Tai-yaki-like food product having a crust containing eggshell powder and oil and fat having a melting point of 40°C or above as additives. The technique disclosed in Patent Document 1, however, is for preventing deterioration of texture of Tai-yaki-like food products due to frozen or chilled preservation, and is therefore not for improving the texture when fresh-baked.

Patent Document 2 discloses a premix powder for cream puff shells containing 100 parts by weight of a starch mixture consisting of cross-linked α-starch and non-cross-linked α-starch and 0.1 to 20 parts by weight of casein as a leavening agent. The technique disclosed in Patent Document 2, however, is for simplifying the manufacturing process and improving the efficiency of producing puff shells, and is therefore not for improving the texture etc. of the puff shell.

Further, Patent Document 3 discloses a dough for puffed food products containing 100 parts by weight of a farinaceous raw material and 10 to 150 parts by weight of a milk-processed product as an example of a dough for puffed food products that allows puffed food products such as cream puff shells to be made through simple processes without using eggs and wheat flour. The puff shells manufactured from this puffed-product dough, however, is soft in texture, and does not provide a crispy texture.

Patent Document 1 Japanese Patent Laid-Open Publication No. H11-137177
Patent Document 2 Japanese Patent Laid-Open Publication No. H8-275721
Patent Document 3 Japanese Patent Laid-Open Publication No. H10-191877
Furthermore, document JP6038666A discloses a premix for preparing puff pastry, comprising sodium caseinate, starch and oil/fat.

### Disclosure of the Invention

### Problems to be Solved by the Invention

An object of the present invention is to provide a premix for baked snacks that can provide baked snacks having a crispy texture and that allows the fresh-baked texture and flavor to be kept for a long time.

### Means for Solving the Problems

The present invention achieves the above-described object by providing a premix for baked snacks according to the attached claims.

### Effect of the Invention

The baked-snack premix of the present invention can provide baked snacks having a crispy texture and allows the fresh-baked crispy texture and flavor to be kept for a long time.

### Best Mode for Carrying out the Invention

There is no particular limitation to the lactoprotein to be used in the present invention, and examples thereof include casein, casein salts (such as sodium caseinate and calcium caseinate), α-lactoglobulin, β-lactoglobulin, and serum albumin. In the present invention, it is also possible to use food materials containing lactoprotein, such as dry whole milk, skim milk powder, and whey powder, as the lactoprotein. As the food materials containing lactoprotein, it is preferable to use a food material containing equal to or above 5% by mass of lactoprotein. In the present invention, it is possible to use one or more of the compounds/materials selected from the above-listed lactoproteins or food materials containing lactoprotein.

The content of the lactoprotein in the baked-snack premix of the present invention is 0.1 to 10% by mass, and more preferably 0.2 to 3% by mass. If the content of the lactoprotein is too small, the snack will lack crispiness and tend to have a persistently starchy texture. On the other hand, if the content of the lactoprotein is too large, the texture will be too light, and it will not be preferable in terms of cost. Note that in cases where the food materials containing lactoprotein is to be used as the lactoprotein, it is necessary to mix the food material containing lactoprotein at an amount so that the amount of lactoprotein contained in the food material falls within the above-described range.

There is no particular limitation to the starch to be used in the present invention, and examples that may be used include farina or starch made from corn, wheat, potatoes, rice, tapioca, sweet potatoes, waxy corn, high-amylose corn, glutinous rice, barley, mung beans, sago, sorghum (kaoliang), etc., or processed/chemically-processed starch obtained by subjecting the starch listed above to one or more processes including gelatinization, acetylation, etherification, cross-linking, etc. Among the starches listed above, starch made from any one of corn, wheat, potatoes, rice, or tapioca is particularly preferable. In the present invention, it is possible to use one or more of the starches selected from the above-listed starches.

The content of the starch in the baked-snack premix of the present invention is 30 to 95% by mass, and more preferably 40 to 90% by mass. If the content of the starch is too small, the snack will lack crispiness and have a persistently starchy texture. On the other hand, if the content of the starch is too large, the snack will lack flavor and have an unsatisfactory taste.

In addition to the lactoprotein and the starch described above, it is preferable that the baked-snack premix of the present invention further contains an emulsifier. Examples of the emulsifier include glycerol fatty acid esters, diacetyltartaric and fatty acid esters of glycerol, succinic and fatty acid esters of glycerol, propylene glycol fatty acid esters, sucrose esters of fatty acids, sorbitan esters of fatty acids, calcium stearoyl lactylate, sodium stearoyl lactylate, and polysorbate. One or two or more of the emulsifiers selected from the above-listed emulsifiers may be used.

Among these, it is particularly preferable to use glycerol fatty acid esters and/or propylene glycol fatty acid esters, and it is more preferable to use glycerol fatty acid esters and propylene glycol fatty acid esters in combination.

The content of the emulsifier in the baked-snack premix of the present invention is preferably 0.01 to 5% by mass, and more preferably 0.2 to 2% by mass. Containing the emulsifier prevents deterioration of texture even when the snack is stored in a keep-warm device such as a hot warmer for several hours, thus achieving a baked snack that can keep its fresh-baked crispy texture.

In addition to the lactoprotein and the starch described above, it is preferable that the baked-snack premix of the present invention further contains oil and fat. Examples of the oil and fat include rape-seed oil, soybean oil, sesame oil, corn oil, palm oil, sunflower oil, safflower oil, shortening, butter, cacao butter, lard, beef fat, and olive oil. Rape-seed oil, soybean oil, palm oil, and shortening are particularly preferred.

The content of the oil and fat in the baked-snack premix of the present invention is 1 to 15% by mass, and more preferably 3 to 10% by mass. Containing 1 to 15% by mass of oil and fat can achieve a premix that provides a baked snack having a more crispy, preferable texture.

The baked-snack premix of the present invention can be used for manufacturing baked snacks such as Tai-yaki, Okonomi-yaki (Japanese-style pancakes), Tako-yaki (Japanese octopus dumplings), pancakes, corn dogs, waffles, Dora-yaki, pizzas, crepes, and doughnuts, and is particularly suitable as a premix for Tai-yaki, pancakes, or waffles. Note that "Tai-yaki (fish-shaped muffins containing bean jam)" as used in the present invention is a concept that encompasses Imagawa-yaki and Ohban-yaki (round muffins containing bean jam).

The baked-snack premix of the present invention may further contain, as appropriate depending on the type of baked snack, other raw materials and additives conventionally used in baked snacks, such as wheat flour, other cereal flours, soybean protein, wheat protein, egg powder, dietary fiber, leavening agents, thickening agents (such as pectin, carrageenan, xanthan gum, guar gum, and locust bean gum), dietary salt, sugars, sweeteners, spices, seasonings, vitamins, minerals, pigment, and aroma flavorings. It is preferable to appropriately select materials/additives from the above-listed raw materials and additives and to prepare a premix having a composition that corresponds to the intended baked snack.

The following gives examples of preferred compositions for cases where the baked-snack premix of the present invention is to be used as a Tai-yaki premix, a pancake premix, or a waffle premix, for example.

### [Example of preferred composition for Tai-yaki premix]

| | |
|---|---|
| Soft flour | 0 to 60 parts by mass |
| Starch | 30 to 90 parts by mass |
| Sugars | 3 to 15 parts by mass |
| Oil and fat | 1 to 15 parts by mass |
| Sodium caseinate | 0.1 to 10 parts by mass |
| Glycerol fatty acid ester | 0.5 to 1 parts by mass |

### [Example of preferred composition for pancake premix]

| | |
|---|---|
| Soft flour | 0 to 60 parts by mass |
| Hard flour | 0 to 20 parts by mass |
| Starch | 30 to 50 parts by mass |
| Sugars | 10 to 30 parts by mass |
| Oil and fat | 1 to 5 parts by mass |
| Leavening agent | 1 to 5 parts by mass |
| Sodium caseinate | 0.1 to 5 parts by mass |
| Glycerol fatty acid ester | 0.8 to 1.5 parts by mass |
| Aroma flavoring | 0.1 parts by mass |

### [Example of preferred composition for waffle premix]

| | |
|---|---|
| Soft flour | 10 to 40 parts by mass |
| Hard flour | 5 to 30 parts by mass |
| Starch | 30 to 60 parts by mass |
| Oil and fat | 1 to 15 parts by mass |
| Sugars | 1 to 20 parts by mass |
| Leavening agent | 0.5 to 5 parts by mass |
| Sodium caseinate | 0.1 to 5 parts by mass |
| Glycerol fatty acid ester | 0.2 to 0.8 parts by mass |

The baked-snack premix of the present invention allows a baked snack to be made according to the same conventional methods for making baked snacks using conventional baked-snack premixes, except that the present premix is used. More specifically, according to ordinary processes corresponding to the type of intended baked snack, water or milk, as well as eggs, oil and fat, sugars, milk products, emulsifiers, yeast, chocolate, cocoa, or fruit juice as necessary, may be added as appropriate to the baked-snack premix of the present invention, and the mixture may be mixed and baked. The amount of water to be added to the baked-snack premix of the present invention is determined as appropriate depending on, for example, the type of intended baked snack. For example, for a Tai-yaki premix, the amount of water is preferably 50 to 200 parts by mass, and more preferably 80 to 150 parts by mass, to 100 parts by mass of the premix. For a pancake premix, the amount of water is preferably 30 to 150 parts by mass, and more preferably 50 to 80 parts by mass, to 100 parts by mass of the premix. Further, for a waffle premix, the amount of water is preferably 60 to 150 parts by mass, and more preferably 80 to 120 parts by mass, to 100 parts by mass of the premix.

There is no limitation to the filling to be used when making a Tai-yaki using the baked-snack premix of the present invention, and conventionally-used fillings may be used. For example, it is possible to use bean jam, cream, jam, chocolate, cheese, ice cream, marron paste, sweet potato paste, curry, rice cake, and the like.

A baked snack according to the present invention made by using the baked-snack premix of the present invention maintains a crispy texture for a long time, and also maintains a crispy texture even after frozen preservation or chilled preservation. Ordinary methods may be employed for freezing; either quick freezing or slow freezing may be employed, but quick freezing is preferred. There is no particular limitation in how to thaw the frozen baked snack according to the present invention, and examples include leaving the frozen snack to thaw on its own, thawing in a chilled state, thawing in a microwave oven, or enclosing the frozen snack in a bag etc. and placing it in water or under running water. Any of these methods may be employed.

### Examples

The present invention is described in further detail below through examples and comparative examples. The present invention, however, is not limited whatsoever to the following examples.

### Examples 1 to 13 and Comparative Examples 1 to 4

Tai-yaki premixes were prepared respectively according to the compositions shown in Tables 1 to 5.

**[Table 1]**

| Tai-yaki premix composition | | | | |
|---|---|---|---|---|
| | Example 1 | Example 2 | Example 3 | Comparative Example 1 |
| Wheat flour | 59 | 29 | 0 | 79 |
| Starch | 30 | 60 | 90 | 10 |
| Sugars | 5 | 5 | 4 | 5 |
| Sodium caseinate | 1 | 1 | 1 | 1 |
| Oil and fat | 5 | 5 | 5 | 5 |
| Total (parts by mass) | 100 | 100 | 100 | 100 |
| Texture evaluation result | 4.0 | 4.6 | 4.6 | 3.0 |

**[Table 2]**

| Tai-yaki premix composition | | | |
|---|---|---|---|
| | Example 4 | Example 5 | Example 6 |
| Wheat flour | 31 | 27 | 19 |
| Starch | 60 | 60 | 60 |
| Sugars | 3 | 7 | 15 |
| Sodium caseinate | 1 | 1 | 1 |
| Oil and fat | 5 | 5 | 5 |
| Total (parts by mass) | 100 | 100 | 100 |
| Texture evaluation result | 4.2 | 4.7 | 4.4 |

**[Table 3]**

| Tai-yaki premix composition | | | | |
|---|---|---|---|---|
| | Example 7 | Comparative Example 2 | Comparative Example 3 | Comparative Example 4 |
| Wheat flour | 29 | 29 | 29 | 29 |
| Starch | 60 | 60 | 60 | 60 |
| Sugars | 5 | 5 | 5 | 5 |
| Sodium caseinate | 1 | 0 | 0 | 0 |
| Egg white powder | 0 | 1 | 0 | 0 |
| Wheat protein | 0 | 0 | 1 | 0 |
| Soybean protein | 0 | 0 | 0 | 1 |
| Oil and fat | 5 | 5 | 5 | 5 |
| Total (parts by mass) | 100 | 100 | 100 | 100 |
| Texture evaluation result | 4.5 | 3.3 | 3.2 | 3.6 |

**[Table 4]**

| Tai-yaki premix composition | | | |
|---|---|---|---|
| | Example 8 | Example 9 | Example 10 |
| Wheat flour | 29.9 | 26 | 22 |
| Starch | 60 | 60 | 60 |
| Sugars | 5 | 5 | 5 |
| Sodium caseinate | 0.1 | 4 | 8 |
| Oil and fat | 5 | 5 | 5 |
| Total (parts by mass) | 100 | 100 | 100 |
| Texture evaluation result | 4.6 | 4.7 | 4.5 |

**[Table 5]**

| Tai-yaki premix composition | | | |
|---|---|---|---|
| | Example 11 | Example 12 | Example 13 |
| Wheat flour | 33 | 27 | 19 |
| Starch | 60 | 60 | 60 |
| Sugars | 5 | 5 | 5 |
| Sodium caseinate | 1 | 1 | 1 |
| Oil and fat | 1 | 7 | 15 |
| Total (parts by mass) | 100 | 100 | 100 |
| Texture evaluation result | 4.0 | 4.7 | 4.5 |

### Evaluation Test Example 1

Tai-yakis were made according to the following method respectively using the Tai-yaki premixes prepared respectively according to Examples 1 to 13 and Comparative Examples 1 to 4.

### <Method for making Tai-yaki>

One hundred parts by mass of the Tai-yaki premix and 110 parts by mass of water were mixed, and the mixture was baked for six minutes in a Tai-yaki baking machine at 180°C, to obtain a Tai-yaki.

The texture of the Tai-yaki obtained was evaluated according to the following evaluation criteria. The respective evaluation results (an average score of ten panelists) are shown in Tables 1 to 5.

### <Criteria for evaluating texture of Tai-yaki>

Score 5: Very crispy
Score 4: Somewhat crispy
Score 3: Normal
Score 2: Somewhat persistently starchy in texture
Score 1: Extremely persistently starchy in texture

### Examples 14 to 16 and Comparative Example 5

Pancake premixes were prepared respectively according to the compositions shown in Table 6.

**[Table 6]**

| Pancake premix composition | | | | |
|---|---|---|---|---|
| | Example 14 | Example 15 | Example 16 | Comparative Example 5 |
| Soft flour | 33 | 13 | 0 | 77 |
| Hard flour | 10 | 0 | 0 | 0 |
| Starch | 30 | 60 | 75 | 0 |
| Sugars | 20 | 20 | 18 | 20 |
| Sodium caseinate | 1 | 1 | 1 | 0 |
| Leavening agent | 3 | 3 | 3 | 3 |
| Oil and fat | 3 | 3 | 3 | 0 |
| Total (parts by mass) | 100 | 100 | 100 | 100 |
| Texture evaluation result | 4.5 | 4.5 | 4.4 | 3.0 |

### Evaluation Test Example 2

Pancakes were made according to the following method respectively using the pancake premixes prepared respectively according to Examples 14 to 16 and Comparative Example 5.

### <Method for making pancakes>

One hundred parts by mass of the pancake premix, 60 parts by mass of water, and 25 parts by mass of eggs were mixed, and the mixture was baked on a hot plate at 185°C for three minutes on one side and three minutes on the other side, to obtain a pancake.

The texture of the pancake obtained was evaluated according to the following evaluation criteria. The respective evaluation results (an average score of ten panelists) are shown in Table 6.

### <Criteria for evaluating texture of pancakes>

Score 5: Very crispy surface
Score 4: Somewhat crispy surface
Score 3: Normal
Score 2: Somewhat persistently starchy in texture
Score 1: Extremely persistently starchy in texture

### Examples 17 to 19 and Comparative Example 6

Waffle premixes were prepared respectively according to the compositions shown in Table 7.

**[Table 7]**

| Waffle premix composition | | | | |
|---|---|---|---|---|
| | Example 17 | Example 18 | Example 19 | Comparative Example 6 |
| Soft flour | 21 | 0 | 0 | 72 |
| Hard flour | 20 | 11 | 0 | 0 |
| Starch | 30 | 60 | 71 | 0 |
| Sugars | 10 | 10 | 10 | 10 |
| Sodium caseinate | 1 | 1 | 1 | 0 |
| Leavening agent | 3 | 3 | 3 | 3 |
| Oil and fat | 15 | 15 | 15 | 15 |
| Total | 100 | 100 | 100 | 100 |
| Texture evaluation result | 4.5 | 4.5 | 4.3 | 3.0 |

### Evaluation Test Example 3

Waffles were made according to the following method respectively using the waffle premixes prepared respectively according to Examples 17 to 19 and Comparative Example 6.

### <Method for making waffles>

One hundred parts by mass of the waffle premix, 100 parts by mass of water, and 20 parts by mass of eggs were mixed, and the mixture was baked in a waffle maker at 180°C for five minutes, to obtain a waffle.

The texture of the waffle obtained was evaluated according to the following evaluation criteria. The respective evaluation results (an average score of ten panelists) are shown in Table 7.

### <Criteria for evaluating texture of waffles>

Score 5: Very crispy surface
Score 4: Somewhat crispy surface
Score 3: Normal
Score 2: Somewhat persistently starchy in texture
Score 1: Extremely persistently starchy in texture

### Examples 20 to 24

Tai-yaki premixes were prepared respectively according to the compositions shown in Table 8.

**[Table 8]**

| Tai-yaki premix composition | | | | | |
|---|---|---|---|---|---|
| | Example 20 | Example 21 | Example 22 | Example 23 | Example 24 |
| Wheat flour | 26.5 | 26.2 | 26 | 26 | 27 |
| Starch | 60 | 60 | 60 | 60 | 60 |
| Sugars | 5 | 5 | 5 | 5 | 5 |
| Sodium caseinate | 1 | 1 | 1 | 1 | 1 |
| Oil and fat | 7 | 7 | 7 | 7 | 7 |
| Glycerol fatty acid ester | 0.5 | 0.8 | 1.0 | 0.5 | 0 |
| Propylene glycol fatty acid ester | 0 | 0 | 0 | 0.5 | 0 |
| Total | 100 | 100 | 100 | 100 | 100 |
| Texture evaluation result | 4.4 | 4.7 | 4.6 | 4.8 | 4.0 |

### Evaluation Test Example 4

Tai-yakis were made according to the following method respectively using the Tai-yaki premixes prepared respectively according to Examples 20 to 24.

### <Method for making Tai-yaki>

One hundred parts by mass of the Tai-yaki premix and 110 parts by mass of water were mixed, and the mixture was baked for six minutes in a Tai-yaki baking machine at 180°C, to obtain a Tai-yaki.

The texture of the obtained Tai-yaki after preserving it for two hours in a hot warmer set at 65°C was evaluated according to the following evaluation criteria. The respective evaluation results (an average score of ten panelists) are shown in Table 8.

### <Criteria for evaluating texture of Tai-yaki>

Score 5: Very crispy
Score 4: Somewhat crispy
Score 3: Normal
Score 2: Somewhat persistently starchy in texture
Score 1: Extremely persistently starchy in texture

## Claims

1. A premix for baked snacks, containing starch, lactoprotein, and fat and oil, wherein
the content of the starch is 30 to 95% by mass, the content of the lactoprotein is 0.1 to 10% by mass, and the content of the oil and fat is 1 to 15% by mass; and wherein
the baked snack is a Tai-yaki (Japanese-style fish-shaped or round muffin containing bean jam), an Okonomi-yaki (Japanese-style pancake), a Tako-yaki (Japanese octopus dumpling), a pancake, a waffle, a Dora-yaki (Japanese-style round pancakes having bean jam sandwiched in between), or a crepe.

2. The premix for baked snacks according to claim 1, wherein the lactoprotein is casein or a casein salt.

3. The premix for baked snacks according to claim 1 or claim 2, wherein the starch is a starch made from any one of corn, wheat, potatoes, rice, or tapioca.

4. A baked snack made by using the premix for baked snacks according to any one of claims 1 to 3, wherein the baked snack is a Tai-yaki, an Okonomi-yaki, a Tako-yaki, a pancake, a waffle, a Dora-yaki, or a crepe.

## Patentansprüche

1. Vormischung für gebackene Snacks, enthaltend Stärke, Lactoprotein, und Fett und Öl, wobei
der Gehalt an Stärke 30 bis 95 Massen-% beträgt, der Gehalt an Lactoprotein 0,1 bis 10 Massen-% beträgt, und der Gehalt an Öl und Fett 1 bis 15 Massen-% beträgt; und wobei
der gebackene Snack ein Tai-yaki (ein fischförmiger oder runder Muffin nach japanischer Art, der Bohnenmarmelade enthält), ein Okonomi-yaki (ein Pfannkuchen nach japanischer Art), ein Tako-yaki (japanischer Knödel mit Oktopus), ein Pfannkuchen, eine Waffel, ein Dora-yaki (runde Pfannkuchen nach japanischer Art mit einer dazwischen eingeschobenen Schicht Bohnenmarmelade), oder ein Crepe ist.

2. Die Vormischung für gebackene Snacks nach Anspruch 1, wobei das Lactoprotein Casein oder ein Caseinsalz ist.

3. Die Vormischung für gebackene Snacks nach Anspruch 1 oder Anspruch 2, wobei die Stärke eine Stärke ist, die aus irgendeinem von Mais, Weizen, Kartoffeln, Reis oder Tapioca hergestellt ist.

4. Gebackener Snack, der unter Verwendung der Vormischung für gebackene Snacks nach einem der Ansprüche 1 bis 3 hergestellt worden ist, wobei der gebackene Snack ein Tai-yaki, ein Okonomi-yaki, ein Tako-yaki, ein Pfannkuchen, eine Waffel, ein Dora-yaki oder ein Crepe ist.

## Revendications

1. Prémélange pour collations cuites au four, contenant de l'amidon, une lactoprotéine, et une huile et matière grasse, dans lequel la teneur en amidon est de 30 à 95 % en poids, la teneur en lactoprotéine est de 0,1 à 10 % en poids, et la teneur en huile et matière grasse est de 1 à 15 % en poids ; et dans lequel
la collation cuite au four est un Tai-yaki (gaufre japonaise en forme de poisson ou ronde contenant de la purée de haricots), un Okonomi-yaki (pancake à la japonaise), un Tako-yaki (boulette japonaise au poulpe), un pancake, une gaufre, un Dora-yaki (crêpes rondes japonaises formant sandwich fourré à la purée de haricots), ou une crêpe.

2. Prémélange pour collations cuites au four selon la revendication 1, dans lequel la lactoprotéine est la caséine ou un sel de caséine.

3. Prémélange pour collations cuites au four selon la revendication 1 ou la revendication 2, dans lequel l'amidon est un amidon préparé à partir de l'un quelconque des ingrédients suivants : maïs, blé, pommes de terre, riz, ou tapioca.

4. Collation cuite au four préparée à l'aide du prémélange pour collations cuites au four selon l'une quelconque des revendications 1 à 3, dans laquelle la collation cuite au four est un Tai-yaki, un Okonomi-yaki, un Tako-yaki, un pancake, une gaufre, un Dora-yaki, ou une crêpe.
